# EUROPEAN PATENT SPECIFICATION

(11) **EP 4 229 443 B1**
(45) Date of publication and mention of the grant of the patent: **13.08.2025**
(21) Application number: 21795035.1
(22) Date of filing: 12.10.2021
(51) Int. Cl.: G01S 17/894, G01S 7/497, G01S 17/88, G01S 7/481, G01S 17/36, A01J 5/017

(54) **IMAGE PROCESSOR AND COMPUTER-IMPLEMENTED IMAGE PROCESSING METHOD**
BILDPROZESSOR UND COMPUTERIMPLEMENTIERTES BILDVERARBEITUNGSVERFAHREN
PROCESSEUR D'IMAGE ET PROCÉDÉ DE TRAITEMENT D'IMAGE MIS EN OEUVRE PAR ORDINATEUR

(30) Priority: 13.10.2020 SE 2051188
(43) Date of publication of application: 23.08.2023
(60) Divisional application: 23204867.8
(73) Proprietor: DeLaval Holding AB, 147 21 Tumba (SE)
(72) Inventor: RAJALA, Arto, 147 21 Tumba (SE)
(74) Representative: DeLaval International AB
(86) International application number: PCT/SE2021/050996
(87) International publication number: WO 2022/081069

(56) References cited:
- US-A1- 2018 205 926
- US-B1- 8 988 662

## Description

### TECHNICAL FIELD

The present invention relates generally to three dimensional (3D) image processing. Especially, the invention relates to an image processor for processing time-of-flight image data and a corresponding computer-implemented image processing method.

### BACKGROUND

Modern cameras have become fairly advanced data collection sensors. Today, for example there are medical screening arrangements containing very accurate high-speed thermal cameras capable of registering body skin temperature en masse of people entering a building, or a public transportation vehicle. Additionally, various forms of depth sensing cameras are used to control vehicles and robots with remarkable precision. For example, modern milking robots often rely on time-of-flight (TOF) cameras for their operation. A TOF camera is a range imaging system that employs time-of-flight techniques to resolve distance between the camera and imaged objects for each point of the image. The TOF camera measures the round trip time of an artificial light signal provided by a laser or a light emitting diode (LED). Laser-based time-of-flight cameras are part of a broader class of scannerless (light detection and ranging) LIDAR, in which an entire scene is captured with each laser pulse, as opposed to point-by-point with a laser beam, such as in scanning LIDAR systems. TOF cameras may be used to cover ranges of a few centimeters up to several kilometers. Naturally, in automatic milking applications, the TOF camera operates in the shorter end of this range, say at distances up to a few decimeters.

US 10750712 B2 shows an implement for automatically milking a dairy animal, such as a cow. The implement comprises a milking parlour, a sensor for observing a teat, and a milking robot for automatically attaching a teat cup to the teat. The milking robot comprises a robot control that is connected to the sensor. The sensor comprises a radiation source for emitting light, a receiver for receiving electromagnetic radiation reflected from the dairy animal, a lens, and sensor control unit. The sensor comprises a matrix with a plurality of rows and a plurality of columns of receivers. The sensor control unit is designed to determine for each of the receivers a phase difference between the emitted and the reflected electromagnetic radiation in order to calculate the distance from the sensor to a plurality of points on the part to be observed of the dairy animal.

US 10430956 B2 describes an image processing method for reducing distortion of a depth image. The method involves: obtaining a plurality of original images based on light beams which are emitted to and reflected from a subject; determining original depth values of original depth images obtained from the plurality of original images, based on phase delays of the light beams, the reflected light beams comprising multi-reflective light beams that distort the original depth values; determining imaginary intensities of the multi-reflective light beams with respective to each phase of the multi-reflective light beams, based on regions having intensities greater than a predetermined intensity in the original depth images; correcting the original depth values of the original depth images, based on the imaginary intensities of the multi-reflective light beams. The method involves generating corrected depth images based on the corrected original depth values.

US 2018/205926 A1 relates to a TOF depth and RGB camera system comprising an array of LEDs, a RGB camera, and a TOF camera configured to obtain a depth image of a scene. If an object blocks light from the LED array, the created shadow may be within the TOF image due to a parallax between the LEDs and the TOF camera. The shadow area in the image is identified and corrected.

US 8 988 662 B1 relates to a TOF depth imaging system comprising two TOF cameras and two light emitters configured to consecutively illuminate a scene and capture depth information. The consecutive depth images are combined to mitigate shadows caused by objects in single images.

Thus, it is known to use a TOF camera in a milking implement. There is also a solution for reducing the distortion of a TOF camera's depth image based on corrected depth images. However, interfering objects located between the TOF camera's light sources and an object of interest may still cause accuracy problems in terms of the distance measured to the object of interest, which for example may be represented by a teat to which a robot shall connect a teat cup of a milking machine.

### SUMMARY

The object of the present invention is therefore to offer a solution that mitigates the above problem and produces high-accuracy distance data also in situations where one or more objects in an imaged scene partially prevent the light of the TOF camera's light sources from reaching various objects in the scene. According to one aspect of the invention, the object is achieved by an image processor according to claim 1.

The above image processor is advantageous because it produces accurate distance data also for a scene where the objects are located relative to the TOF imaging system and one another in such a way that some sectors of the scene are only illuminated by a subset of the TOF imaging system's light sources.

According to the invention, the image processor is configured to adjust the distance data by modifying a piece of distance data expressing a distance to a point on a surface on the at least one part of the at least one second object by an adaptation amount. The piece of distance data is determined without consideration of the shadow effect, and the adaptation amount depends on which light source or light sources of the at least two light sources whose light did not reach said point. Here, the at least two light sources amount to a first total number n and the light source or light sources whose light did not reach said point amount to a second total number of at least one and n-1 or less. Consequently, it is straightforward to compensate for the light sources whose light does not reach the at least one part of the at least one second object.

The above adaptation is implemented by the image processor being communicatively connected to a lookup table containing a data set that expresses the adaptation amount for each possible combination of light sources of the at least two light sources whose light did not reach said point. Said combination is applicable to a particular distance expressed by the distance data. Thus, for each such distance, the lookup table contains a data set that expresses the adaptation amount to be used depending on the specific light sources being shaded. Thereby, the image processor may obtain the relevant adaptation amount from the lookup table in a rapid and reliable manner.

According to another embodiment of this aspect of the invention, the at least one first object has a known position and spatial extension relative to the TOF imaging system and the at least two light sources. The image processor is further configured to adjust the distance data to compensate for the at least one of the at least two light sources whose light is obstructed from reaching at least one sector behind the at least one first object. Namely, in this scenario, it is known in advance which sectors of the TOF imaging system's view field that will always be partially shadowed by the at least one first object.

For example, the scene may contain a milking location, and at least one of the at least one first object may be a teat cup that is arranged on a carrying structure being mechanically linked to the TOF imaging system. In such a case, the image processor is preferably configured to adjust the distance data to compensate for the light sources whose light will be obstructed from reaching at least one sector behind the teat cup where a teat to which the teat cup is to be connected may be located.

According to the invention, the image processor is configured to determine a distance to a potentially shadowing object in the scene, which potentially shadowing object is located at a shorter distance from the TOF imaging system than any other object in the scene. I.e. the image processor determines the nearest object. The image processor is further configured apply a reverse ray-tracing algorithm to establish at least one sector in the scene that is estimated to be shadowed by the nearest object with respect to light from at least one of the light sources. The image processor is then configured to include the potentially shadowing object in a group of candidates from which to select the at least one first object when determining if the shadow effect exists. Thus, the image processor establishes whether shadow effects exist in a structured manner.

Preferably, the image processor is specifically configured to execute a first processing step wherein a spatial position of a further potentially shadowing object in the scene is determined, which further potentially shadowing object is located at a shorter distance from the TOF imaging system than any other object in the scene that has not yet been included in the group of candidates; execute a second processing step wherein said reverse ray-tracing algorithm is applied to establish at least one sector in the scene which is estimated to be shadowed by the further potentially shadowing object with respect to light from at least one light source of the at least two light sources; and execute a third processing step wherein the further potentially shadowing object is included in the group of candidates from which to select the at least one first object when determining if the shadow effect exists.

The image processor is configured to repeat the first, second and third processing steps until a stop criterion has been fulfilled. Thereby, the shadow effects in the scene can be established to a desired degree of precision.

The stop criterion, in turn, may be set in response to a time constraint and/or a processing capacity constraint.

According to a further embodiment of this aspect of the invention, the image processor is configured to determine a first piece of the distance data expressing a first distance to a first surface area of the second object, which first surface area is located in a first sector illuminated by all of the at least two light sources. The image processor is likewise configured to determine a second piece of the distance data expressing a second distance to a second surface area of the at least one part of the at least one second object, which second surface area is located in a second sector illuminated by a subset of the at least two light sources. The determining of the second piece of the distance data here involves extrapolating the first surface area into the second sector. Preferably, the extrapolating assumes that the at least one second object has a generally known shape. Namely, this facilitates the extrapolating process and enhances the data quality. Of course, this is especially true if the at least one second object indeed has a shape that is relatively close to the assumed generally known shape.

In a non-claimed illustrative example, the second number is zero. This means that the light from no light sources illuminates the second sector, and that consequently the TOF imaging system is "blind" here with respect to distance measuring. Nevertheless, the extrapolation according to the above is still possible provided that the at least one second object is assumed to have a generally known shape.

According to yet another embodiment of this aspect of the invention, the scene contains a milking location, and the at least one second object is a teat of a milking animal. In such a case, a milking robot is readily controllable for example to attach teat cups to the animal based on the adjusted distance data being produced by the image processor.

According to still another embodiment of this aspect of the invention, the image data contains data that for each pixel in a set of pixels expresses a light intensity value, for instance representing a greyscale value. The image processor is further configured to adjust the intensity value of a pixel in said set by an adaptation intensity, which pixel represents a point on a surface of the at least one part of the at least one second object that is illuminated by light from less than all of the at least two light sources. The intensity value is calculated without consideration of the shadow effect, and the adaptation intensity is proportional to a number of the at least two light sources whose light is obstructed from reaching said point. Thus, the more light sources that are obstructed, the larger the adaptation intensity becomes. Thereby, partially shadowed objects in the scene can be made somewhat brighter than what they otherwise would have been. This for example facilitates distinguishing the teats furthest from the TOF imaging system.

According to another aspect of the invention, the object is achieved by a computer-implemented image processing method according to claim 10.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figures 1, 2: schematically illustrate TOF imaging systems with associated light sources according to first and second embodiments of the invention;
- Figure 3: shows an example of a use case for a TOF imaging system according to one embodiment of the invention in a sideview;
- Figure 4: shows a top-view of the use case exemplified in Figure 3;
- Figures 5a, b: illustrate a scene as viewed from a TOF imaging
- Figures 6-7: system according to one embodiment when the TOF imaging system is located at two different distances from the scene; show side views of a scene devoid of and containing first and second objects respectively according to one embodiment of the invention;
- Figures 8-9: illustrate how a piece of distance data may be adjusted according to one embodiment of the invention, which distance data expresses a distance to a point on a surface being illuminated by less than all light sources of the TOF imaging system;
- Figure 10: illustrates in detail how a first object in a scene may obstruct light from the light sources of the TOF imaging system from reaching various parts of a second object in the scene according to one embodiment of the invention;
- Figures 11-12: illustrate in detail how sectors are determined according to one embodiment of the invention, which sectors are illuminated only by a subset of the light sources of the TOF imaging system due to a shadow effect caused by a first object with a known position and spatial extension relative to the TOF imaging system;
- Figure 13: shows a block diagram of a TOF imaging system and an image processor according to one embodiment of the invention; and
- Figure 14: illustrates, by means of a flow diagram, the general method according to a preferred embodiment of the invention.

### DETAILED DESCRIPTION

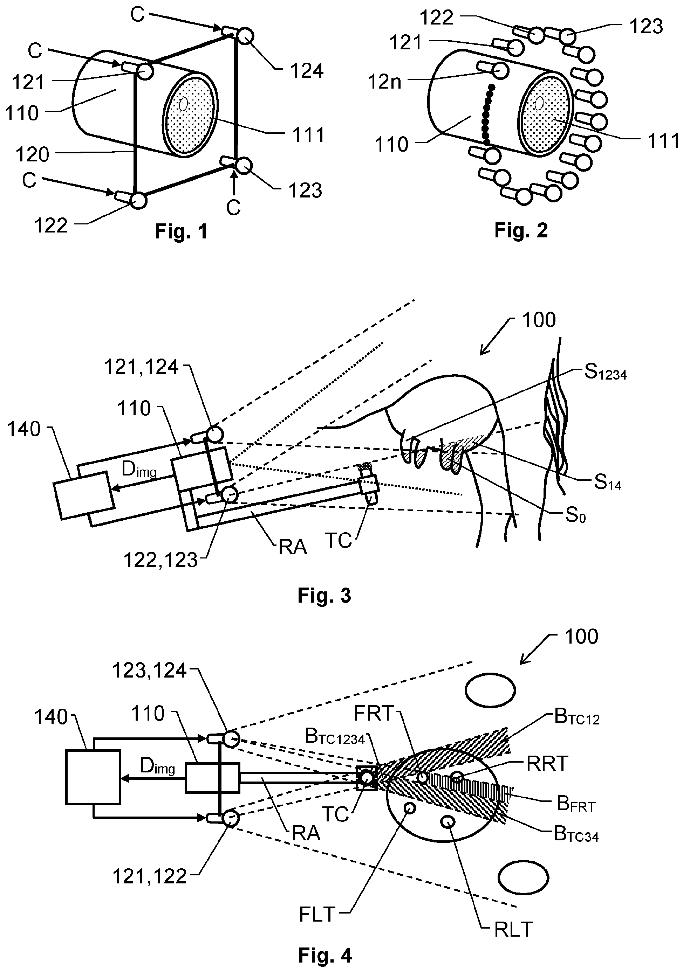

In Figure 1, we see a schematic illustration a TOF imaging system 110 according to a first embodiment of the invention. A set of light sources 121, 122, 123 and 124 respectively are arranged around a TOF imaging system 110. It is generally advantageous if the light sources 121, 122, 123 and 124 emit non-visible light in the infrared (IR) spectrum. However, it is not excluded that the light sources 121, 122, 123 and 124 emit light in other parts of the electromagnetic spectrum, such as in the form of visible light.

Here, where the set of light sources contains four light sources, the light sources are preferably arranged in a plane parallel to a sensor matrix of the TOF imaging system 110 and at 90 degrees angular offset from one another. For example, the light sources 121, 122, 123 and 124 may be attached to a frame 120 around a front lens 111 of the TOF imaging system 110. In any case, the light sources 121, 122, 123 and 124 are controlled by at least one control signal C in synchronization with how image data is registered by the sensor matrix of the TOF imaging system 110. For example, the at least one control signal C may control the light sources 121, 122, 123 and 124 so that there is a particular desired phase delay between each of the light beams emitted from the respective light sources. Namely, such calibration between the image data registration and the illumination of a scene renders it relatively straightforward to produce distance data expressing respective distances from the TOF imaging system 110 to different points on imaged objects in the scene. However, if for example, a common control signal C is arranged to control all the light sources 121, 122, 123 and 124 in a serial manner, and the signal lines interconnecting the light sources 121, 122, 123 and 124 for forwarding the common control signal C causes an unknown delay of the respective points in time at which the light beams from the different light sources 121, 122, 123 and 124 are emitted, the light sources 121, 122, 123 and 124 need to be individually calibrated to the sensor matrix of the TOF imaging system 110 to enable production of accurate distance data.

Figure 2 schematically illustrates a TOF imaging system 110 according to a second embodiment of the invention, where n light sources 121, 122, 123, ..., 12n are evenly distributed in a circular shaped arrangement around the TOF imaging system 110. Here, if the light sources 121, 122, 123, ..., 12n are controlled by a common control signal C as outlined above, and the interconnecting signal lines introduce an equal delay t_{D} of the common control signal C between each light source, the n:th light source 12n would start to emit its light beam at a point in time n·t_{D} after that the first light source 121 started to emit its light beam. In practice, however, this is rarely the case. Instead, the emission of light from the different light sources typically starts at points in time which are at least uncertain to some degree. As will be discussed below, this, in turn, may cause a degraded accuracy in the distance data being produced by the TOF imaging system 110.

Figures 3 and 4 show side and top views respectively of a TOF imaging system according to the invention, which is used for controlling a milking robot.

An image processor 140 is here configured to obtain image data D_{img} that is registered by a TOF imaging system 110. The image data D_{img} represents a scene 100, which in this case contains an udder to whose teats a carrying structure RA of the milking robot shall attach teat cups TC based on the image data D_{img}. The scene 100 is illuminated by at least two light sources, for example as described above with reference to Figure 1. Specifically, in the embodiment of Figures 3 and 4, there are four light sources 121, 122, 123 and 124 respectively, which are calibrated to enable the image processor 140 to produce distance data to be comprised in the image data D_{img}. The distance data expresses respective distances from the TOF imaging system 110 to points on imaged objects. For example, in the image data D_{img}, a piece of distance data is associated to each pixel, which piece of distance data expresses a distance from the TOF imaging system 110 to a point on an object in the scene 100 that is represented by that particular pixel.

In order to enhance the quality of the distance data, the image processor 140 is configured to determine if a shadow effect exists by which at least one first object in the scene 100 obstructs light from at least one of the light sources from reaching at least one part of at least one second object in the scene 100 and be reflected there from into the TOF imaging system 110.

In the example shown in Figures 3 and 4, two such shadow effects are illustrated, namely (a) where a first object in the form of a teat cup TC obstructs light from all the light sources 121 - 124 from reaching a shadow sector B_{TC1234} behind the teat cup TC; and (b) where a first object in the form of a front right teat FRT obstructs light from the light sources 123 and 124 from reaching a part of a second object in the form of a rear right teat RRT that is located in a shadow sector B_{FRT}. Fortunately, at the illustrated position of the structure RA carrying the teat cup TC, no teat is located in a shadow sector B_{TC34} in which light from the light sources 123 and 124 is obstructed by the teat cup TC. Thus, light from all the light sources reach an upper part of the front right teat FRT. Nevertheless, due to the limited angular coverage of the light sources 123 and 124, the left-side teats FLT and RLT are only illuminated by the light sources 121 and 122. Moreover, as can be seen in Figure 3, the teat cup TC shadows the lower light sources 122 and 123, so that the light from these light sources only reaches the upper parts of the front teats FRT and FLT.

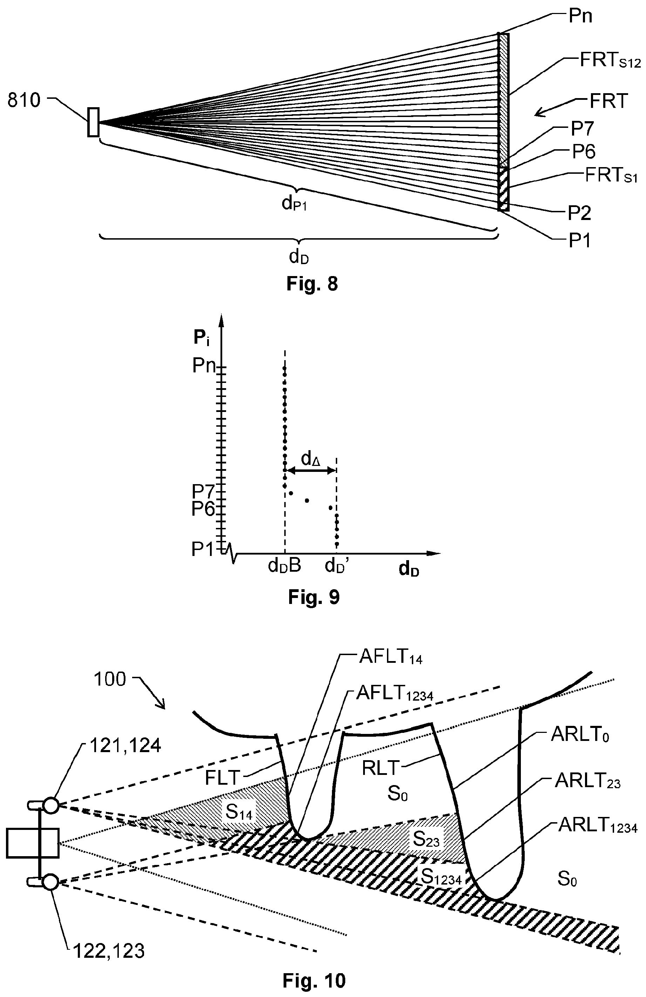

If the image processor 140 determines that the shadow effect exists with respect to at least one part of at least one second object as described above, the image processor 140 adjusts the distance data to compensate for the at least one light source, i.e. 121, 122, 123 and/or 124 whose light did not reach the at least one part of the at least one second object FLT, FRT, RLT and/or RRT. The principles for how to adjust the distance data will be discussed below with reference to Figures 8 and 9.

According to one embodiment of the invention, the image processor 140 is configured to determine if a shadow effect exists as follows. The image processor 140 determines a distance to a potentially shadowing object in the scene 100, such as the teat cup TC, the front right teat FRT and/or the front left teat FLT, which potentially shadowing object is located at a shorter distance from the TOF imaging system 110 than any other object in the scene 100. The image processor 140 then applies a reverse ray-tracing algorithm to establish sectors in the scene 100 estimated to be shadowed by the potentially shadowing object TC, FRT and/ or FLT with respect to light from at least one light source of the at least two light sources 121, 122, 123 and/or 124. In Figure 4, B_{TC1234} is a first example of such a sector behind the teat cup TC which is not illuminated by any light source at all, B_{TC12} is a second example of such a sector behind the teat cup TC which is illuminated only by the light sources 123 and 124, B_{TC34} is a third example of such a sector behind the teat cup TC which is illuminated only by the light sources 121 and 122, and B_{FRT} is a fourth example of such a sector behind the teat cup TC which is illuminated only by the light sources 121 and 122. Thereafter, the image processor 140 includes the potentially shadowing object TC, FRT and/or FLT in a group of candidates from which to select the at least one first object when determining if the shadow effect exists. Of course, if the TOF imaging system 110 is used for controlling a milking robot, there is a substantial chance that the potentially shadowing object is a teat, namely a teat located closer to the lens of the TOF imaging system 110 than another teat.

Preferably, the image processor 140 applies a stepwise procedure to determine if the shadow effect exists. Specifically, the image processor 140 may be configured to execute first, second and third processing steps according to the below.

In the first processing step, the image processor 140 determines a spatial position of a further potentially shadowing object in the scene 100. The further potentially shadowing object is located at a shorter distance from the TOF imaging system 110 than any other object in the scene 100 that has not yet been included in the above group of candidates.

In the second processing step, the image processor 140 applies said reverse ray-tracing algorithm to establish at least one sector in the scene 100 that is estimated to be shadowed by the further potentially shadowing object with respect to light from at least one light source of the at least two light sources 121, 122, 123, and/or 124.

In the third processing step, the image processor 140 includes the further potentially shadowing object in the group of candidates from which to select the at least one first object TC, FLT and/or FRT when determining if the shadow effect exists.

For accuracy reasons, it is desirable if the image processor 140 is configured to repeat the first, second and third processing steps until a stop criterion has been fulfilled. The stop criterion may be set in response to a time constraint and/or a processing capacity constraint on the image processor 140.

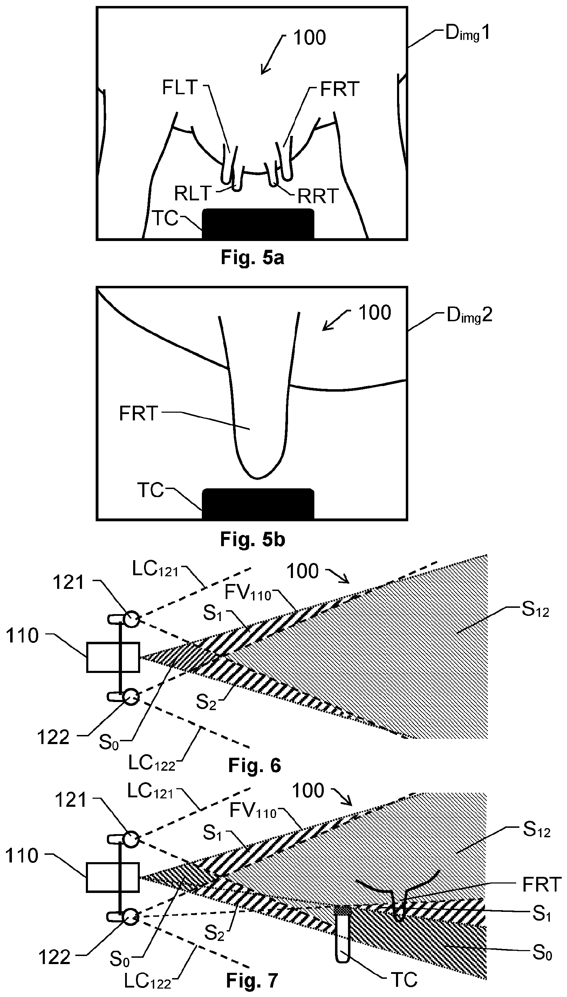

Figure 5a illustrates the scene 100 as viewed from the TOF imaging system 110 according to one embodiment of the invention, where the TOF imaging system 110 is located at a first distance from the scene 100. Figure 5b illustrates the scene 100 in Figure 5a viewed from the TOF imaging system 110, where the TOF imaging system 110 is located at a second distance from the scene 100, which is shorter than the first distance. Thus, the image data D_{img1} registered from the first distance may contain pictorial information and distance data describing multiple teats FLT, FRT, RLT and/or RRT, whereas the image data D_{img2} registered from the second distance may contain pictorial information and distance data that exclusively describes a single teat, for example FRT, to which the milking robot is to attach a teat cup TC. According to one embodiment of the invention, the teat cup TC is arranged on the carrying structure RA, which is mechanically linked to the TOF imaging system 110. It is further preferable if the TOF imaging system 110 has a fixed position relative to the carrying structure RA. Namely, this facilitates determining the above-mentioned shadow effect on beforehand. The fixed positional interrelationship between the TOF imaging system 110 renders it possible to know, prima facie, which shadow effects that will be caused by the teat cup TC when placed in the carrying structure RA. However, it also causes the teat cup TC to potentially shadow a larger number of interesting objects when the TOF imaging system 110 is located at a longer distance from the scene 100 than when it is located at a shorter distance there from.

Figure 6 shows a side view of a scene 100 devoid of any objects, and Figure 7 shows a corresponding side view of a scene 100 containing first and second objects TC and FRT respectively. For reasons of clarity, we assume that only two light sources 121 and 122 are arranged around the TOF imaging system 110. Here, the light sources 121 and 122 are arranged in a linear configuration, i.e. where each light source has a 180 degree spatial angle to its nearest neighbor in a plane parallel to a sensor of the TOF imaging system 110. We further assume that the TOF imaging system 110 has a field of view FV₁₁₀ and that the light from the light sources 121 and 122 cover light cones LC₁₂₁ and LC₁₂₂ respectively. In figure 6, we see that none of the light cones LC₁₂₁ and LC₁₂₂ illuminate a sector S₀ immediately in front of the TOF imaging system 110, and that both of the light cones LC₁₂₁ and LC₁₂₂ illuminate a sector S₁₂ further away from the TOF imaging system 110. Exclusively, the light source 121 illuminates an upper sector S₁, and exclusively the light source 122 illuminates a lower sector S₂. However, the key objects in the scene 100 are expected to be located in the sector S₁₂ that is illuminated by both of the light cones LC₁₂₁ and LC₁₂₂.

In Figure 7, the scene 100 contains such a key object of interest in the form of the teat FRT. The scene 100 also contains a teat cup TC, which is to be attached to the teat FRT by a milking robot (not shown). Since, typically, the milking robot controls the teat cup TC to approach the teat FRT somewhat from below, the teat cup TC shadows more of the light in the light cone LC₁₂₂ of the light source 122 that is arranged below the TOF imaging system 110 than the light in the light cone LC₁₂₁ of the light source 121 that is arranged above the TOF imaging system 110. The light from both the light sources 121 and 122 is obstructed from reaching a lower sector S₀ behind the teat cup TC, while the light from the light source 121 reaches an upper sector S₁ behind the teat cup TC. The light from the light source 122 is however obstructed from upper sector S₁ due to the teat cup's TC position in relation to the angular width and orientation of the light cone LC₁₂₂ of the light source 122.

It should be noted that the field of view of the TOF imaging system 110 and the respective angular widths of illumination of the light sources shown in this document are merely used for illustrative purposes. Preferably, the light sources should have wider illumination sectors than what is illustrated in the drawings, say in the order of 150 to 170 degrees. It is typically advantageous if also the field of view of the TOF imaging system 110 is somewhat wider than what is illustrated in the drawings.

Referring now to Figure 8, we will explain how the image processor 140 adjusts the distance data d_{D} according to one embodiment of the invention to compensate for the at least one light source(s) whose light did not reach the at least one part of the at least one second object. Figure 8 illustrates how a piece of the distance data may be adjusted, which distance data expresses a distance to a point on a surface FRT that is illuminated by less than all light sources of the TOF imaging system 110.

Let us here assume that the surface represents a second object in the form of the teat FRT being visible to the TOF imaging system 110 in Figure 7. Here, an upper part FRT_{S12} of the surface is illuminated by both the light sources 121 and 122, while a lower part FRT_{S1} of the surface is illuminated only the light source 121.

The TOF imaging system 110 is designed to determine a line-of-sight distance d_{P1} between a sensor 810 in the TOF imaging system 110 and respective points on objects reflecting the light from the light sources 121 and 122. Based on the line-of-sight distance d_{P1}, in turn, the TOF imaging system 110 may be further configured to determine an orthogonal distance d_{D} to said points. However, the determinations made by the TOF imaging system 110 presupposes that each of said points has received light from all illuminating light sources associated with the TOF imaging system 110. Here, the light sources are and represented by 121 and 122, they may be calibrated to the TOF imaging system 110, for instance by applying information about phase delays between the emitted light beams. The inventor has found that if, due to a shadow effect, a surface on an imaged object is illuminated by light from less than all the light sources associated with the TOF imaging system 110, the distance data d_{D} determined by the TOF imaging system 110 shall be adjusted by an adaptation amount. The adaptation amount, in turn, depends on which specific light beams that were shadowed with respect to the surface in question.

As explained briefly above with reference to Figures 1 and 2, the TOF imaging system 110 is calibrated to receive reflected light from all the light sources in order to produce the distance data accurately.

Referring now to Figure 9, we see a diagram where the horizontal axis designates pieces of distance data d_{D} expressing respective distances to points P1, P2, ..., P6, P7, ..., Pn on the surface of the second object FRT, and the vertical axis indicates said points. In the illustrated example, it is assumed that the points P1, P2, ..., P6 are located on the part of the second object FRT whose surface FRT_{S1} is illuminated only by the light source 121. In other words, the light source 122 is shadowed with respect to the surface FRT_{S1}. The points P7, ..., Pn, however, are located on the part of the second object FRT whose surface FRT_{S12} is illuminated by all/both light sources 121 and 122. Therefore, the TOF imaging system 110 determines a substantially equal and presumably correct orthogonal distance d_{D}B to the points P7, ..., Pn on the surface FRT_{S12}, and a slightly incorrect orthogonal distance d_{D}' to the points P1, P2, ..., P6 on the surface FRT_{S1} with a gradually increasing skew in a transition zone between the two surfaces FRT_{S12} and FRT_{S1}. Here, the interrelationship between the light sources 121 and 122 turned out to be such that in the absence of reflected light from the light source 122, the TOF imaging system 110 determines the orthogonal distance d_{D}' to the points P1, P2, ..., P6 on the surface FRT_{S1} to a somewhat longer measure d_{Δ} than if light from both the light sources 121 and 122 had been reflected on this surface. Figure 9 illustrates this effect.

Analogously, if the light from the light source 121 were shadowed with respect to the surface, the TOF imaging system 110 would instead have determined the orthogonal distance to this surface to a somewhat shorter distance, more precisely by an amount equal to the measure -d_{Δ}.

In fact, for a given TOF imaging system 110, and for each piece of distance data d_{D}' determined by the TOF imaging system 110, an appropriate adjustment amount can be determined, which adjustment amount depends on which specific light sources that are shadowed. As discussed above, the adjustment amount may be either positive or negative. Moreover, the magnitude of the adjustment amount may vary with the distance data d_{D}' as well as the number of light sources being shadowed. Nevertheless, for a range of pieces of distance data d_{D}' determined by the TOF imaging system 110, such appropriate adjustment amounts can be determined at well-defined increments, i.e. sampling points, by measuring actual physical distances to different points in the TOF imaging system's 110 field of view and comparing these measurements with corresponding pieces of distance data d_{D}' determined by the TOF imaging system 110 under various shadowing conditions.

According to one embodiment of the invention, the image processor 140 is configured to adjust the distance data d_{D} by modifying a piece of distance data d_{D}' expressing a distance to a point on a shadowed surface, such as the above-mentioned at least one part of the at least one second object FLT, by an adaptation amount d_{Δ}. The piece of distance data d_{D}' is determined without consideration of the shadow effect, i.e. straight out of the TOF imaging system 110. The adaptation amount d_{Δ} depends on which light source or light sources whose light did not reach said point. The at least two light sources amount to a first total number n and the light source or light sources whose light did not reach said point amount to a second total number of at least one and n-1 or less. Thus, if the system includes two light sources, no more than one light source can be shadowed with respect to said point. The sign and the magnitude of the adaptation amount d_{Δ} may either be positive or negative depending on the interrelationship between the shadowed and non-shadowed light sources.

For example if the system is set to operate at a relatively short and known range of distances, such as in a milking installation, it may be advantageous to register appropriate values of the adaptation amount d_{Δ} in advance, and store these values in a lookup table for easy access by the image processor 140. Naturally, such an approach may be advantageous irrespective of the operating distance. I.e. the lookup-table design is generally beneficial for any range of operation for the TOF imaging system 110.

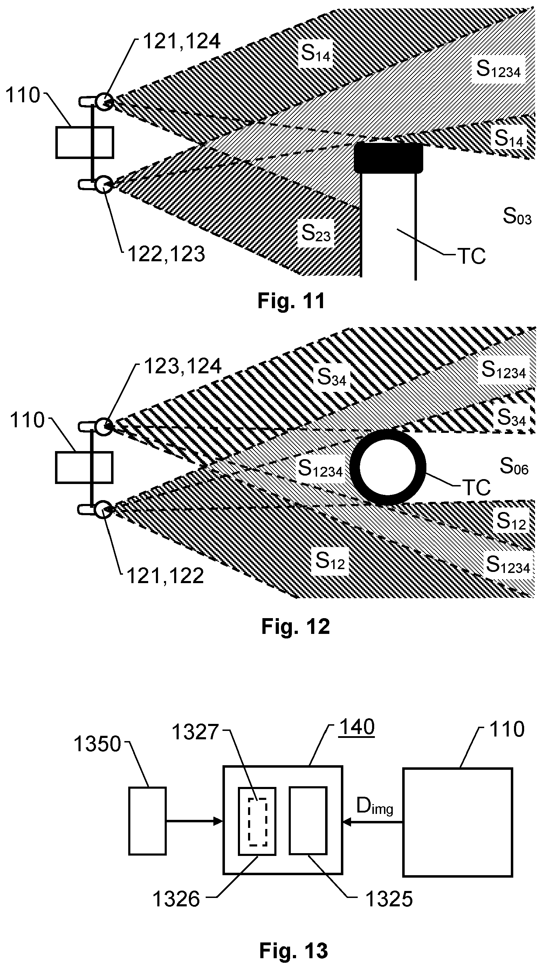

Figure 13 shows a block diagram of a TOF imaging system 110 and an image processor 140 according to one embodiment of the invention, where the image processor 140 is communicatively connected to a lookup table 1350. The lookup table 1350 contains a data set expressing the adaptation amount d_{Δ} for each possible combination of the light sources 121, 122, 123 and/or 124 whose light did not reach a point on a surface for at least one distance expressed by the distance data d_{D}. For a milking installation, the distance data d_{D} typically ranges from 2 dm to 2 m, and more preferably the distance data d_{D} ranges from 2 dm to 5 dm. In any case, the image processor 140 is configured to obtain the adaptation amount d_{Δ} from the lookup table 1350 using a base orthogonal distance d_{D}B determined by the TOF imaging system 110.

It is generally advantageous if the image processor 140 is configured to effect the above-described procedure in an automatic manner by executing a computer program 1327. Therefore, the image processor 140 may include a memory unit 1326, i.e. nonvolatile data carrier, storing the computer program 1327, which, in turn, contains software for making processing circuitry in the form of at least one processor 1325 in the image processor 140 execute the actions mentioned in this disclosure when the computer program 1327 is run on the at least one processor 1325.

According to one embodiment of the invention, the image data D_{img} contains data that for each pixel in a set of pixels expresses a light intensity value. In this embodiment, the image processor 140 is further configured to adjust the intensity value of a pixel in the set of pixels by an adaptation intensity as described below.

Here, we assume that the pixel represents one of the points P1, P2, ..., P6 on a surface FLT_{S1} of the at least one part of the second object that is illuminated by light from less than all of the at least two light sources 121, 122, 123 and 124. The intensity value is calculated without consideration of the shadow effect; and, the adaptation intensity is proportional to a number of the light sources 121, 122, 123 and/or 124 whose light is obstructed from reaching said point P1, P2, ..., P6. Consequently, the pictorial data quality can be enhanced and any partially shadowed objects in the scene can be made somewhat brighter and easier to distinguish visually. This, in turn, facilitates distinguishing the rearmost teats RLF and RRT, i.e. the teats that are furthest from the TOF imaging system 110.

Figure 10 illustrates further details on how a first object FLT in a scene 100 may obstruct the light from the light sources 121, 122, 123 and 124 of the TOF imaging system 110, so that this light does not reach parts of a second object RLT in the scene 100. In particular, with reference to Figure 10, we will discuss how the image processor 140 may adjust the distance data d_{D} determined by the TOF imaging system 110 according to embodiments of the invention.

According to one embodiment of the invention, the image processor 140 is configured to determine a first piece of the distance data d_{D} expressing a first distance to a first surface area ARLT₁₂₃₄ of the second object RLT, which first surface area ARLT₁₂₃₄ is located in a first sector S₁₂₃₄ illuminated by all four light sources 121, 122, 123 and 124. The image processor 140 is further configured to determine a second piece of the distance data d_{D} expressing a second distance to a second surface area ARLT₂₃ of the at least one part of the at least one second object RLT, which second surface area ARLT₂₃ is located in a second sector S₂₃ illuminated only by a subset of the light sources 121, 122, 123 and 124, namely by the light sources 122 and 123. The image processor 140 determines the second piece of the distance data d_{D} according to a procedure that involves extrapolating the first surface area ARLT₁₂₃₄ into the second sector S₂₃. Due to the better illumination, the distance to the first surface area ARLT₁₂₃₄ can be determined with higher accuracy. In fact, such extrapolating can even be carried out over smaller surfaces that are not illuminated by any light sources at all.

Of course, the extrapolating can be improved if the image processor 140 can assume that the at least one second object RLT has a generally known shape. This type of extrapolating may for example be applied if the scene 100 contains a milking location, and the at least one second object RLT is a teat of a milking animal. Indeed, in a milking scenario, the specific shape of the at least one second object RLT may be known to a comparatively high degree of accuracy. Namely, provided that the milking animals are identified, the physical characteristics of each teat of each animal may have been measured and stored in a database to which the image processor 140 has access. Consequently, the image processor 140 may determine distances to the surfaces of the teats with very high accuracy, also if some of these surfaces are partially shadowed with respect to one or more of the light sources 121, 122, 123 and/or 124 associated to the TOF imaging system 110.

In addition to objects in the scene 100 shadowing one another from the light emitted by the light sources, shadow effects may occur due to known objects that are always present in front of the TOF imaging system 110, and for example form part of a milking robot. Figures 11 and 12 illustrate an example of this in side and top views respectively. More precisely, if there is a first object TC with a known position and spatial extension relative to the TOF imaging system 110, sectors can be determined a priori, which sectors are illuminated only by a subset of the light sources 121, 122, 123 and 124 of the TOF imaging system 110 due to a shadow effect caused by the first object TC because of its position and spatial extension relative to the TOF imaging system 110.

According to one embodiment of the invention, the image processor 140 is configured to adjust the distance data d_{D} determined by the TOF imaging system 110 in order to compensate for the at least one of the light sources 121, 122, 123 and/or 124 whose light is obstructed from reaching at least one sector behind the first object TC. Specifically, in the example shown in Figure 11, the image processor 140 is configured to adjust the distance data d_{D} in sectors S₁₄ above and behind the first object TC by a first adaptation amount because the sector S₁₄ is only illuminated by a first subset of the four light sources 121, 122, 123 and 124, namely the light sources 121 and 124. The image processor 140 is further configured to adjust the distance data d_{D} in a sector S₂₃ in front of the first object TC by a second adaptation amount because the sector S₂₃ is only illuminated by a second subset of the four light sources 121, 122, 123 and 124, namely the light sources 122 and 123. Additionally, in a third sector S₀₃ behind the first object TC, the image processor 140 is incapable of producing any distance data d_{D} because the third sector S₀₃ is not illuminated by any of the light sources 121, 122, 123 and 124. However, in fourth sector S₁₂₃₄ immediately in front of and above the first object TC, no prima facie distance adjustment is needed. Namely, here, the first object TC does not cause any shadow effect at all.

Similarly, referring to Figure 12, the image processor 140 is configured to adjust the distance data d_{D} in a fourth sector S₁₂ by a fourth adaptation amount because the sector S₁₂ is only illuminated by a fourth subset of the four light sources 121, 122, 123 and 124, namely the light sources 121 and 122; and adjust the distance data d_{D} in a fifth sector S₃₄ by a fifth adaptation amount because the sector S₃₄ is only illuminated by a fifth subset of the four light sources 121, 122, 123 and 124, namely the light sources 123 and 124. The image processor 140 is not capable of producing any distance data d_{D} in a sixth sector S₀₆ behind the object TC either because the sector S₀₆ is not illuminated by any of the light sources 121, 122, 123 and 124. However, in a seventh sector S₁₂₃₄ immediately in front of and on both sides of the first object TC no prima facie distance adjustment is needed, since here the first object TC does not cause any shadow effect at all.

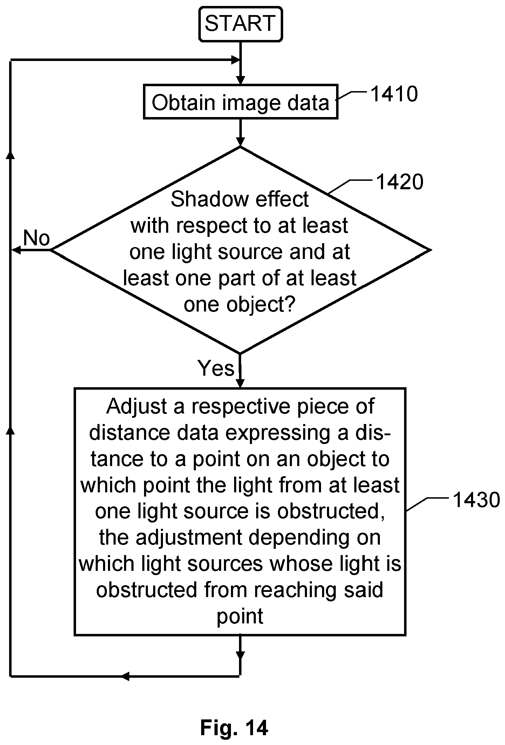

In order to sum up, and with reference to the flow diagram in Figure 14, we will now describe the computer-implemented image processing method according to a preferred embodiment of the invention.

In a first step 1410, image data D_{img} is obtained, which image data D_{img} have been registered by a TOF imaging system 110 and which image data D_{img} represents a scene 100 illuminated by at least two light sources calibrated to enable an image processor 140 to produce distance data d_{D} to be comprised in the image data D_{img}. The distance data d_{D} expresses respective distances from the TOF imaging system 110 to points on imaged objects in the scene 100.

A step 1420 thereafter determines if a shadow effect exists by which at least one first object in the scene 100 obstructs light from at least one light source of the at least two light sources from reaching at least one part of at least one second object in the scene 100 and be reflected there from into the TOF imaging system 110. If it is determined that the shadow effect exists, a step 1430 follows, and otherwise the procedure loops back to step 1410.

In step 1430, the distance data d_{D} produced by the TOF imaging system 110 is adjusted to compensate for the at least one light source whose light did not reach the at least one part of the at least one second object. The adjustment is made depending on which specific light source or light sources whose light did not reach the at least one part of the at least one second object. Subsequently, the procedure loops back to step 1110.

All of the process steps, as well as any sub-sequence of steps, described with reference to Figure 14 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

The invention is not restricted to the described embodiments in the figures, but may be varied within the scope of the claims.

## Claims

1. An image processor (140) configured to:
obtain image data (D_{img}) registered by a time-of-flight, TOF, imaging system (110), which image data (D_{img}) represents a scene (100) illuminated by at least two light sources (121, 122, 123, 124) calibrated to enable the image processor (140) to produce distance data (d_{D}) to be comprised in the image data (D_{img}), which distance data (d_{D}) expresses respective distances from the TOF imaging system (110) to points on imaged objects; determine if a shadow effect exists by which at least one first object (TC; FLT, FRT) in the scene (100) obstructs light from at least one light source (121, 122, 123, 124) of the at least two light sources (121, 122, 123, 124) from reaching at least one part of at least one second object (FLT, FRT; RLT, RRT) in the scene (100) and be reflected there from into the TOF imaging system (110);
**characterized in that** the image processor (140) is further configured to determine a distance (d_{D}) to a potentially shadowing object (TC, FRT, FLT) in the scene (100), which potentially shadowing object (TC, FRT, FLT) is located at a shorter distance from the TOF imaging system (110) than any other object in the scene (100);
apply a reverse ray-tracing algorithm to establish at least one sector (B_{TC1234}, B_{TC12}, B_{TC34}, B_{FRT}) in the scene (100) estimated to be shadowed by the potentially shadowing object (TC, FRT, FLT) with respect to light from at least one light source of the at least two light sources (121, 122, 123, 124); and
include the potentially shadowing object (TC, FRT, FLT) in a group of candidates from which to select the at least one first object (TC, FLT, FRT) when determining if the shadow effect exists; and if it is determined that the shadow effect exists,
adjust the distance data (d_{D}) to compensate (d_{Δ}) for the at least one light source (121, 122, 123, 124) whose light did not reach the at least one part of the at least one second object (FLT, FRT; RLT, RRT) by modifying a piece of distance data (d_{D}') expressing a distance to a point (P1, P2, ..., P6) on a surface (FLT_{S1}) on the at least one part of the at least one second object (FLT) by an adaptation amount (d_{Δ}), the piece of distance data (d_{D}') being determined without consideration of the shadow effect, and the adaptation amount (d_{Δ}) depending on which light source or light sources of the at least two light sources (121, 122, 123, 124) whose light did not reach said point (P1, P2, ..., P6), where the at least two light sources amount to a first total number n and the light source or light sources whose light did not reach said point amount to a second total number which ranges from one up to n-1, wherein
the image processor (140) is communicatively connected to a lookup table (1450) comprising a data set expressing the adaptation amount (d_{Δ}) for each possible combination of light sources of the at least two light sources (121, 122, 123, 124) whose light did not reach said point (P1, P2, ..., P6) for at least one distance expressed by the distance data (d_{D}), and
the image processor (140) is configured to obtain the adaptation amount (d_{Δ}) from the lookup table (1450).

2. The image processor (140) according to claim 1, wherein the at least one first object (TC) has a known position and spatial extension relative to the TOF imaging system (110) and the at least two light sources (121, 122, 123, 124), and the image processor (140) is configured to:
adjust the distance data (d_{D}) to compensate for the at least one of the at least two light sources (121, 122, 123, 124) whose light is obstructed from reaching at least one sector (S₁₄, S₀, S₁₂, S₃₄) behind the at least one first object (TC).

3. The image processor (140) according to any one of the preceding claims, wherein the scene (100) comprises a milking location, and at least one of the at least one first object is a teat cup (TC) arranged on a carrying structure (RA) mechanically linked to the TOF imaging system (110).

4. The image processor (140) according to any one of the preceding claims, wherein the scene (100) comprises a milking location, and at least one of the at least one first object is a teat (FRT, FLT) of a milking animal.

5. The image processor (140) according to any of the preceding claims, configured to execute:
a first processing step wherein a spatial position of a further potentially shadowing object (FLT) in the scene (100) is determined, which further potentially shadowing object (FLT) is located at a shorter distance from the TOF imaging system (110) than any other object in the scene (100) that has not yet been included in the group of candidates;
a second processing step wherein said reverse ray-tracing algorithm is applied to establish at least one sector in the scene (100) estimated to be shadowed by the further potentially shadowing object (FLT) with respect to light from at least one light source (121, 124) of the at least two light sources (121, 122, 123, 124); and
a third processing step wherein the further potentially shadowing object (FLT) is included in the group of candidates from which to select the at least one first object (TC, FLT, FRT) when determining if the shadow effect exists.

6. The image processor (140) according to claim 5, configured to repeat the first, second and third processing steps until a stop criterion has been fulfilled, wherein the stop criterion is set in response to at least one of: a time constraint and a processing capacity constraint.

7. The image processor (140) according to any one of the preceding claims, configured to:
determine a first piece of the distance data (d_{D}) expressing a first distance to a first surface area (ARLT₁₂₃₄) of the second object (RLT) which first surface area is located in a first sector (S₁₂₃₄) illuminated by all of the at least two light sources (121, 122, 123, 124); and
determine a second piece of the distance data (d_{D}) expressing a second distance to a second surface area (ARLT₂₃) of the at least one part of the at least one second object (RLT) which second surface area is located in a second sector (S₂₃) illuminated by a subset of the at least two light sources (121, 122, 123, 124), and the determining of the second piece of the distance data (d_{D}) involves extrapolating the first surface area (ARLT₁₂₃₄) into the second sector (S₂₃) wherein the extrapolating assumes that the at least one second object (RLT) has a generally known shape.

8. The image processor (140) according to claim 7, wherein the scene (100) comprises a milking location, and the at least one second object (RLT) is a teat of a milking animal.

9. The image processor (140) according to any one of the preceding claims, wherein the image data (D_{img}) comprises data that for each pixel in a set of pixels expresses a light intensity value, and the image processor (140) is further configured to:
adjust the intensity value of a pixel in the set of pixels by an adaptation intensity, which pixel represents a point (P1, P2, ..., P6) on a surface (FLT_{S1}) of the at least one part of the at least one second object being illuminated by light from less than all of the at least two light sources (121, 122, 123, 124), the intensity value being calculated without consideration of the shadow effect, and the adaptation intensity being proportional to a number of the at least two light sources (121, 122, 123, 124) whose light is obstructed from reaching said point (P1, P2, ..., P6), , where the at least two light sources amount to a first total number n and the light source or light sources whose light did not reach said point amount to a second total number which ranges from one up to n-1.

10. A computer-implemented image processing method comprising:
obtaining image data (D_{img}) registered by a time-of-flight, TOF, imaging system (110), which image data (D_{img}) represents a scene (100) illuminated by at least two light sources (121, 122, 123, 124) calibrated to enable an image processor (140) to produce distance data (d_{D}) to be comprised in the image data (D_{img}), which distance data (d_{D}) expresses respective distances from the TOF imaging system (110) to points on imaged objects;
determining if a shadow effect exists by which at least one first object (TC; FLT, FRT) in the scene (100) obstructs light from at least one light source (121, 122, 123, 124) of the at least two light sources (121, 122, 123, 124) from reaching at least one part of at least one second object (FLT, FRT; RLT, RRT) in the scene (100) and be reflected there from into the TOF imaging system (110); **characterized in that** the method further comprises:
determining a distance (d_{D}) to a potentially shadowing object (TC, FRT, FLT) in the scene (100), which potentially shadowing object (TC, FRT, FLT) is located at a shorter distance from the TOF imaging system (110) than any other object in the scene (100);
applying a reverse ray-tracing algorithm to establish at least one sector (B_{TC1234}, B_{TC12}, B_{TC34}, B_{FRT}) in the scene (100) estimated to be shadowed by the potentially shadowing object (TC, FRT, FLT) with respect to light from at least one light source of the at least two light sources (121, 122, 123, 124); and
including the potentially shadowing object (TC, FRT, FLT) in a group of candidates from which to select the at least one first object (TC, RLT, RRT) when determining if the shadow effect exists; and if it is determined that the shadow effect exists,
adjusting the distance data (d_{D}) to compensate (d_{Δ}) for the at least one light source (121, 122, 123, 124) whose light did not reach the at least one part of the at least one second object (FLT, FRT; RLT, RRT) by modifying a piece of distance data (d_{D}') expressing a distance to a point (P1, P2, ..., P6) on a surface (FLT_{S1}) on the at least one part of the at least one second object (FLT) by an adaptation amount (d_{Δ}), the piece of distance data (d_{D}') being determined without consideration of the shadow effect, and the adaptation amount (d_{Δ}) depending on which light source or light sources of the at least two light sources (121, 122, 123, 124) whose light did not reach said point (P1, P2, ..., P6),
obtaining the adaptation amount (d_{Δ}) from a lookup table (1350) comprising a data set expressing the adaptation amount (d_{Δ}) for each possible combination of light sources of the at least two light sources (121, 122, 123, 124) whose light did not reach said point (P1, P2, ..., P6) for at least one distance expressed by the distance data (d_{D}).

11. The method according to claim 10, wherein the at least one first object (TC) has a known position and spatial extension relative to the TOF imaging system (110) and the at least two light sources (121, 122, 123, 124), and the method comprises:
adjusting the distance data (d_{D}) to compensate for the at least one of the at least two light sources (121, 122, 123, 124) whose light is obstructed from reaching at least one sector (S₁₄, S₀, S₁₂, S₃₄) behind the at least one first object (TC).

12. The method according to any one of the claims 10 to 11, comprising:
executing a first processing step wherein a spatial position of a further potentially shadowing object (RLT) in the scene (100) is determined, which further potentially shadowing object (RLT) is located at a shorter distance from the TOF imaging system (110) than any other object in the scene (100) that has not yet been included in the group of candidates;
executing a second processing step wherein said reverse ray-tracing algorithm is applied to establish at least one sector in the scene (100) estimated to be shadowed by the further potentially shadowing object (RLT) with respect to light from at least one light source (121, 124) of the at least two light sources (121, 122, 123, 124); and
executing a third processing step wherein the further potentially shadowing object (RLT) is included in the group of candidates from which to select the at least one first object (TC, RLT, RRT) when determining if the shadow effect exists.

13. The method according to claim 12, comprising executing the first, second and third processing steps repeatedly until a stop criterion has been fulfilled and setting the stop criterion in response to at least one of: a time constraint and a processing capacity constraint.

14. The method according to any one of the claims 10 to 13, comprising:
determining a first piece of the distance data (d_{D}) expressing a first distance to a first surface area (ARLT₁₂₃₄) of the second object (RLT) which first surface area is located in a first sector (S₁₂₃₄) illuminated by all of the at least two light sources (121, 122, 123, 124); and
determining a second piece of the distance data (d_{D}) expressing a second distance to a second surface area (ARLT₂₃) of the at least one part of the at least one second object (RLT) which second surface area is located in a second sector (S₂₃) illuminated by a subset of the at least two light sources (121, 122, 123, 124), and the determining of the second piece of the distance data (d_{D}) involves extrapolating the first surface area (ARLT₁₂₃₄) into the second sector (S₂₃), wherein the extrapolating assumes that the at least one second object (RLT) has a generally known shape.

15. The method according to any one of the claims 10 to 14, wherein the image data (D_{img}) comprises data that for each pixel in a set of pixels expresses a light intensity value, and the method further comprises:
adjusting the intensity value of a pixel in the set of pixels by an adaptation intensity, which pixel represents a point (P1, P2, ..., P6) on a surface (FLT_{S1}) of the at least one part of the at least one second object being illuminated by light from less than all of the at least two light sources (121, 122, 123, 124), the intensity value being calculated without consideration of the shadow effect, and the adaptation intensity being proportional to a number of the at least two light sources (121, 122, 123, 124) whose light is obstructed from reaching said point (P1, P2, ..., P6).

## Patentansprüche

1. Bildprozessor (140), der konfiguriert ist zum:
Erhalten von Bilddaten (D_{img}), die durch ein Time-of-Flight-Bildgebungssystem, TOF-Bildgebungssystem (110), registriert werden, wobei die Bilddaten (D_{img}) eine Szene (100) darstellen, die durch mindestens zwei Lichtquellen (121, 122, 123, 124) beleuchtet wird, die kalibriert sind, um den Bildprozessor (140) zu aktivieren, um Entfernungsdaten (d_{D}) herzustellen, die in den Bilddaten (D_{img}) enthalten sein sollen, wobei die Entfernungsdaten (d_{D}) jeweilige Entfernungen von dem TOF-Bildgebungssystem (110) zu Punkten auf abgebildeten Objekten ausdrücken;
Bestimmen, ob ein Schatteneffekt vorliegt, durch den mindestens ein erstes Objekt (TC; FLT, FRT) in der Szene (100) verhindert, dass Licht von mindestens einer Lichtquelle (121, 122, 123, 124) der mindestens zwei Lichtquellen (121, 122, 123, 124) mindestens einen Teil mindestens eines zweiten Objekts (FLT, FRT; RLT, RRT) in der Szene (100) erreicht und von dort in das TOF-Bildgebungssystem (110) reflektiert wird;
**dadurch gekennzeichnet, dass** der Bildprozessor (140) ferner konfiguriert ist, um eine Entfernung (d_{D}) zu einem potenziell schattenwerfenden Objekt (TC, FRT, FLT) in der Szene (100) zu bestimmen, wobei sich das potenziell schattenwerfende Objekt (TC, FRT, FLT) in einer kürzeren Entfernung von dem TOF-Bildgebungssystem (110) als jedes beliebige andere Objekt in der Szene (100) befindet;
Anwenden eines umgekehrten Strahlverfolgungsalgorithmus, um mindestens einen Sektor (B_{TC1234}, B_{TC12}, B_{TC34}, B_{FRT}) in der Szene (100) zu erstellen, die schätzungsweise durch das potenziell schattenwerfende Objekt (TC, FRT, FLT) in Bezug auf Licht von mindestens einer Lichtquelle der mindestens zwei Lichtquellen (121, 122, 123, 124) beschattet wird; und
Einschließen des potenziell schattenwerfenden Objekts (TC, FRT, FLT) in eine Gruppe von Kandidaten, aus denen das mindestens eine erste Objekt (TC, FLT, FRT) ausgewählt wird, wenn bestimmt wird, ob der Schatteneffekt vorliegt; und wenn bestimmt wird, dass der Schatteneffekt vorliegt,
Anpassen der Entfernungsdaten (d_{D}), um für die mindestens eine Lichtquelle (121, 122, 123, 124) zu kompensieren (d_{Δ}), deren Licht den mindestens einen Teil des mindestens einen zweiten Objekts (FLT, FRT; RLT, RRT) nicht erreicht hat, durch ein Modifizieren eines Entfernungsdatenelements (d_{D}'), das eine Entfernung zu einem Punkt (P1, P2, ..., P6) auf einer Oberfläche (FLT_{S1}) auf dem mindestens einen Teil des mindestens einen zweiten Objekts (FLT) um einen Anpassungsbetrag (d_{Δ}) ausdrückt, wobei das Entfernungsdatenelement (d_{D}') ohne Berücksichtigung des Schatteneffekts, und der Anpassungsbetrag (d_{Δ}) abhängig davon, welche Lichtquelle oder Lichtquellen der mindestens zwei Lichtquellen (121, 122, 123, 124), deren Licht den Punkt (P1, P2, ..., P6) nicht erreicht hat, bestimmt wird, wobei die mindestens zwei Lichtquellen eine erste Gesamtzahl n ergeben und die Lichtquelle oder Lichtquellen, deren Licht den Punkt nicht erreicht hat, eine zweite Gesamtzahl ergeben, die in einem Bereich von eins bis zu n-1 liegt, wobei
der Bildprozessor (140) mit einer Nachschlagetabelle (1450) kommunikativ verbunden ist, umfassend einen Datensatz, der den Anpassungsbetrag (d_{Δ}) für jede mögliche Kombination von Lichtquellen der mindestens zwei Lichtquellen (121, 122, 123, 124) ausdrückt, deren Licht den Punkt (P1, P2, ..., P6) für mindestens eine durch die Entfernungsdaten (d_{D}) ausgedrückte Entfernung nicht erreicht hat, und
der Bildprozessor (140) konfiguriert ist, um den Anpassungsbetrag (d_{Δ}) aus der Nachschlagetabelle (1450) zu erhalten.

2. Bildprozessor (140) nach Anspruch 1, wobei das mindestens eine erste Objekt (TC) eine bekannte Position und räumliche Ausdehnung relativ zu dem TOF-Bildgebungssystem (110) und den mindestens zwei Lichtquellen (121, 122, 123, 124) aufweist und der Bildprozessor (140) konfiguriert ist zum:
Anpassen der Entfernungsdaten (d_{D}), um für die mindestens eine der mindestens zwei Lichtquellen (121, 122, 123, 124) zu kompensieren, deren Licht daran gehindert ist, mindestens einen Sektor (S₁₄, S₀, S₁₂, S₃₄) hinter dem mindestens einen ersten Objekt (TC) zu erreichen.

3. Bildprozessor (140) nach einem der vorstehenden Ansprüche, wobei die Szene (100) einen Melkplatz umfasst und mindestens eines des mindestens einen ersten Objekts ein Zitzenbecher (TC) ist, der auf einer Tragestruktur (RA) angeordnet ist, die mit dem TOF-Bildgebungssystem (110) mechanisch verknüpft ist.

4. Bildprozessor (140) nach einem der vorstehenden Ansprüche, wobei die Szene (100) einen Melkort umfasst und mindestens eines des mindestens einen ersten Objekts eine Zitze (FRT, FLT) eines Milchtiers ist.

5. Bildprozessor (140) nach einem der vorstehenden Ansprüche, der konfiguriert ist, um auszuführen:
einen ersten Verarbeitungsschritt, wobei eine räumliche Position eines weiteren potenziell schattenwerfenden Objekts (FLT) in der Szene (100) bestimmt wird, wobei sich das weitere potenziell schattenwerfende Objekt (FLT) in einer kürzeren Entfernung von dem TOF-Bildgebungssystem (110) als jedes andere Objekt in der Szene (100) befindet, das noch nicht in die Gruppe von Kandidaten eingeschlossen ist;
einen zweiten Verarbeitungsschritt, wobei der umgekehrte Strahlverfolgungsalgorithmus angewendet wird, um mindestens einen Sektor in der Szene (100) zu erstellen, von dem geschätzt wird, dass er durch das weitere potenziell schattenwerfende Objekt (FLT) in Bezug auf Licht von mindestens einer Lichtquelle (121, 124) der mindestens zwei Lichtquellen (121, 122, 123, 124) beschattet wird; und
einen dritten Verarbeitungsschritt, wobei das weitere potenziell schattenwerfende Objekt (FLT) in die Gruppe von Kandidaten eingeschlossen ist, aus der das mindestens eine erste Objekt (TC, FLT, FRT) ausgewählt wird, wenn bestimmt wird, ob der Schatteneffekt vorliegt.

6. Bildprozessor (140) nach Anspruch 5, der konfiguriert ist, um den ersten, den zweiten und den dritten Verarbeitungsschritt zu wiederholen, bis ein Abbruchkriterium erfüllt ist, wobei das Abbruchkriterium als Reaktion auf mindestens eines eingestellt wird von: einer Zeitbeschränkung und einer Verarbeitungskapazitätsbeschränkung.

7. Bildgebungsprozessor (140) nach einem der vorstehenden Ansprüche, konfiguriert zum:
Bestimmen eines ersten Elements der Entfernungsdaten (d_{D}), die eine erste Entfernung zu einem ersten Oberflächenbereich (ARLT₁₂₃₄) des zweiten Objekts (RLT) ausdrücken, dessen erster Oberflächenbereich sich in einem ersten Sektor (S₁₂₃₄) befindet, der durch alle der mindestens zwei Lichtquellen (121, 122, 123, 124) beleuchtet wird; und
Bestimmen eines zweiten Elements der Entfernungsdaten (d_{D}), die eine zweite Entfernung zu einem zweiten Oberflächenbereich (ARLT₂₃) des mindestens einen Teils des mindestens einen zweiten Objekts (RLT) ausdrücken, dessen zweiter Oberflächenbereich sich in einem zweiten Sektor (S₂₃) befindet, der durch einen Teilsatz der mindestens zwei Lichtquellen (121, 122, 123, 124) beleuchtet wird, und das Bestimmen des zweiten Elements der Entfernungsdaten (d_{D}) ein Extrapolieren der ersten Oberfläche (ARLT₁₂₃₄) in den zweiten Sektor (S₂₃) beinhaltet, wobei bei dem Extrapolieren davon ausgegangen wird, dass das mindestens eine zweite Objekt (RLT) eine im Allgemeinen bekannte Form aufweist.

8. Bildprozessor (140) nach Anspruch 7, wobei die Szene (100) einen Melkort umfasst und das mindestens eine zweite Objekt (RLT) eine Zitze eines Milchtiers ist.

9. Bildprozessor (140) nach einem der vorstehenden Ansprüche, wobei die Bilddaten (D_{img}) Daten umfassen, die für jedes Pixel in einem Satz von Pixeln einen Lichtintensitätswert ausdrücken, und der Bildprozessor (140) ferner konfiguriert ist zum:
Anpassen des Intensitätswerts eines Pixels in dem Satz von Pixeln durch eine Anpassungsintensität, wobei das Pixel einen Punkt (P1, P2, ..., P6) auf einer Oberfläche (FLT_{S1}) des mindestens einen Teils des mindestens einen zweiten Objekts darstellt, das durch Licht von weniger als allen der mindestens zwei Lichtquellen (121, 122, 123, 124) beleuchtet wird, wobei der Intensitätswert ohne Berücksichtigung des Schatteneffekts berechnet wird und die Anpassungsintensität proportional zu einer Anzahl der mindestens zwei Lichtquellen (121, 122, 123, 124) ist, deren Licht daran gehindert wird, den Punkt (P1, P2, ..., P6) zu erreichen, wobei die mindestens zwei Lichtquellen eine erste Gesamtzahl n ergeben und die Lichtquelle oder Lichtquellen, deren Licht den Punkt nicht erreicht hat, eine zweite Gesamtzahl ergeben, die in einem Bereich von eins bis zu n-1 liegt.

10. Computerimplementiertes Bildverarbeitungsverfahren, umfassend:
Erhalten von Bilddaten (D_{img}), die durch ein Time-of-Flight-Bildgebungssystem, TOF-Bildgebungssystem (110), registriert werden, wobei die Bilddaten (D_{img}) eine Szene (100) darstellen, die durch mindestens zwei Lichtquellen (121, 122, 123, 124) beleuchtet wird, die kalibriert sind, um einen Bildprozessor (140) zu aktivieren, um Entfernungsdaten (d_{D}) herzustellen, die in den Bilddaten (D_{img}) enthalten sein sollen, wobei die Entfernungsdaten (d_{D}) jeweilige Entfernungen von dem TOF-Bildgebungssystem (110) zu Punkten auf abgebildeten Objekten ausdrücken;
Bestimmen, ob ein Schatteneffekt vorliegt, durch den mindestens ein erstes Objekt (TC; FLT, FRT) in der Szene (100) verhindert, dass Licht von mindestens einer Lichtquelle (121, 122, 123, 124) der mindestens zwei Lichtquellen (121, 122, 123, 124) mindestens einen Teil mindestens eines zweiten Objekts (FLT, FRT; RLT, RRT) in der Szene (100) erreicht und von dort in das TOF-Bildgebungssystem (110) reflektiert wird; **dadurch gekennzeichnet, dass** das Verfahren ferner umfasst:
Bestimmen einer Entfernung (d_{D}) zu einem potenziell schattenwerfenden Objekt (TC, FRT, FLT) in der Szene (100), wobei sich das potenziell schattenwerfende Objekt (TC, FRT, FLT) in einer kürzeren Entfernung von dem TOF-Bildgebungssystem (110) als jedes andere Objekt in der Szene (100) befindet;
Anwenden eines umgekehrten Strahlverfolgungsalgorithmus, um mindestens einen Sektor (B_{TC1234}, B_{TC12}, B_{TC34}, B_{FRT}) in der Szene (100) zu erstellen, die schätzungsweise durch das potenziell schattenwerfende Objekt (TC, FRT, FLT) in Bezug auf Licht von mindestens einer Lichtquelle der mindestens zwei Lichtquellen (121, 122, 123, 124) beschattet wird; und
Einschließen des potenziell schattenwerfenden Objekts (TC, FRT, FLT) in eine Gruppe von Kandidaten, aus denen das mindestens eine erste Objekt (TC, FLT, FRT) ausgewählt wird, wenn bestimmt wird, ob der Schatteneffekt vorliegt; und wenn festgestellt wird, dass der Schatteneffekt vorhanden ist,
Anpassen der Entfernungsdaten (d_{D}), um für die mindestens eine Lichtquelle (121, 122, 123, 124) zu kompensieren (d_{Δ}), deren Licht den mindestens einen Teil des mindestens einen zweiten Objekts (FLT, FRT; RLT, RRT) nicht erreicht hat, durch ein Modifizieren eines Entfernungsdatenelements (d_{D}'), das eine Entfernung zu einem Punkt (P1, P2, ..., P6) auf einer Oberfläche (FLT_{S1}) auf dem mindestens einen Teil des mindestens einen zweiten Objekts (FLT) um einen Anpassungsbetrag (d_{Δ}) ausdrückt, wobei das Entfernungsdatenelement (d_{D}') ohne Berücksichtigung des Schatteneffekts, und der Anpassungsbetrag (d_{Δ}) abhängig davon, welche Lichtquelle oder Lichtquellen der mindestens zwei Lichtquellen (121, 122, 123, 124), deren Licht den Punkt (P1, P2, ..., P6) nicht erreicht hat, bestimmt wird,
Erhalten des Anpassungsbetrags (d_{Δ}) aus einer Nachschlagetabelle (1350), umfassend einen Datensatz, der den Anpassungsbetrag (d_{Δ}) für jede mögliche Kombination von Lichtquellen der mindestens zwei Lichtquellen (121, 122, 123, 124) ausdrückt, deren Licht den Punkt (P1, P2, ..., P6) für mindestens eine durch die Entfernungsdaten (d_{D})ausgedrückte Entfernung nicht erreicht hat.

11. Verfahren nach Anspruch 10, wobei das mindestens eine erste Objekt (TC) eine bekannte Position und räumliche Ausdehnung relativ zu dem TOF-Bildgebungssystem (110) und den mindestens zwei Lichtquellen (121, 122, 123, 124) aufweist, und das Verfahren umfasst:
Anpassen der Entfernungsdaten (d_{D}), um für die mindestens eine der mindestens zwei Lichtquellen (121, 122, 123, 124) zu kompensieren, deren Licht daran gehindert ist, mindestens einen Sektor (S₁₄, S₀, S₁₂, S₃₄) hinter dem mindestens einen ersten Objekt (TC) zu erreichen.

12. Verfahren nach einem der Ansprüche 10 bis 11, umfassend:
Ausführen eines ersten Verarbeitungsschritts, wobei eine räumliche Position eines weiteren potenziell schattenwerfenden Objekts (FLT) in der Szene (100) bestimmt wird, wobei sich das weitere potenziell schattenwerfende Objekt (FLT) in einer kürzeren Entfernung von dem TOF-Bildgebungssystem (110) als jedes andere Objekt in der Szene (100) befindet, das noch nicht in die Gruppe von Kandidaten eingeschlossen ist;
Ausführen eines zweiten Verarbeitungsschritts, wobei der umgekehrte Strahlverfolgungsalgorithmus angewendet wird, um mindestens einen Sektor in der Szene (100) zu erstellen, von dem geschätzt wird, dass er durch das weitere potenziell schattenwerfende Objekt (FLT) in Bezug auf Licht von mindestens einer Lichtquelle (121, 124) der mindestens zwei Lichtquellen (121, 122, 123, 124) beschattet wird; und
Ausführen eines dritten Verarbeitungsschritts, wobei das weitere potenziell schattenwerfende Objekt (FLT) in die Gruppe von Kandidaten eingeschlossen ist, aus der das mindestens eine erste Objekt (TC, FLT, FRT) ausgewählt wird, wenn bestimmt wird, ob der Schatteneffekt vorliegt.

13. Verfahren nach Anspruch 12, umfassend das wiederholte Ausführen des ersten, des zweiten und des dritten Verarbeitungsschritts, bis ein Abbruchkriterium erfüllt ist, und das Einstellen des Abbruchkriteriums als Reaktion auf mindestens eines von: einer Zeitbeschränkung und einer Verarbeitungskapazitätsbeschränkung.

14. Verfahren nach einem der Ansprüche 10 bis 13, umfassend:
Bestimmen eines ersten Elements der Entfernungsdaten (d_{D}), die eine erste Entfernung zu einem ersten Oberflächenbereich (ARLT₁₂₃₄) des zweiten Objekts (RLT) ausdrücken, dessen erster Oberflächenbereich sich in einem ersten Sektor (S₁₂₃₄) befindet, der durch alle der mindestens zwei Lichtquellen (121, 122, 123, 124) beleuchtet wird; und
Bestimmen eines zweiten Elements der Entfernungsdaten (d_{D}), die eine zweite Entfernung zu einem zweiten Oberflächenbereich (ARLT₂₃) des mindestens einen Teils des mindestens einen zweiten Objekts (RLT) ausdrücken, dessen zweiter Oberflächenbereich sich in einem zweiten Sektor (S₂₃) befindet, der durch einen Teilsatz der mindestens zwei Lichtquellen (121, 122, 123, 124) beleuchtet wird, und das Bestimmen des zweiten Elements der Entfernungsdaten (d_{D}) das Extrapolieren der ersten Oberfläche (ARLT₁₂₃₄) in den zweiten Sektor (S₂₃) beinhaltet, wobei bei dem Extrapolieren davon ausgegangen wird, dass das mindestens eine zweite Objekt (RLT) eine im Allgemeinen bekannte Form aufweist.

15. Verfahren nach einem der Ansprüche 10 bis 14, wobei die Bilddaten (D_{img}) Daten umfassen, die für jedes Pixel in einem Satz von Pixeln einen Lichtintensitätswert ausdrücken, und das Verfahren ferner umfasst:
Anpassen des Intensitätswerts eines Pixels in dem Satz von Pixeln durch eine Anpassungsintensität, wobei das Pixel einen Punkt (P1, P2, ..., P6) auf einer Oberfläche (FLT_{S1}) des mindestens einen Teils des mindestens einen zweiten Objekts darstellt, das durch Licht von weniger als allen der mindestens zwei Lichtquellen (121, 122, 123, 124) beleuchtet wird, wobei der Intensitätswert ohne Berücksichtigung des Schatteneffekts berechnet wird und die Anpassungsintensität proportional zu einer Anzahl der mindestens zwei Lichtquellen (121, 122, 123, 124) ist, deren Licht daran gehindert wird, den Punkt (P1, P2, ..., P6) zu erreichen.

## Revendications

1. Processeur d'images (140) conçu pour :
obtenir des données d'image (D_{img}) enregistrées par un système d'imagerie à temps de vol, TOF, (110), lesquelles données d'image (D_{img}) représentent une scène (100) éclairée par au moins deux sources de lumière (121, 122, 123, 124) étalonnées pour permettre au processeur d'image (140) de produire des données de distance (do) qui doivent être comprises dans les données d'image (D_{img}), lesquelles données de distance (do) expriment les distances respectives du système d'imagerie TOF (110) aux points des objets imagés ;
déterminer s'il existe un effet d'ombre par lequel au moins un premier objet (TC ; FLT, FRT) de la scène (100) empêche la lumière provenant d'au moins une source de lumière (121, 122, 123, 124) parmi les au moins deux sources de lumière (121, 122, 123, 124) d'atteindre au moins une partie d'au moins un second objet (FLT, FRT ; RLT, RRT) de la scène (100) et d'être réfléchie par celui-ci dans le système d'imagerie TOF (110) ;
**caractérisé en ce que** le processeur d'image (140) est en outre conçu pour déterminer une distance (do) jusqu'à un objet potentiellement ombrageux (TC, FRT, FLT) de la scène (100), lequel objet potentiellement ombrageux (TC, FRT, FLT) est situé à une distance plus courte du système d'imagerie TOF (110) que tout autre objet de la scène (100) ;
appliquer un algorithme inverse de traçage de rayons pour établir au moins un secteur (B_{TC1234}, B_{TC12}, B_{TC34}, B_{FRT}) de la scène (100) estimé être ombragé par l'objet potentiellement ombrageux (TC, FRT, FLT) par rapport à la lumière provenant d'au moins une source de lumière parmi les au moins deux sources de lumière (121, 122, 123, 124) ; et
inclure l'objet potentiellement ombrageux (TC, FRT, FLT) dans un groupe de candidats parmi lesquels sélectionner l'au moins un premier objet (TC, FLT, FRT) lors de la détermination de l'existence de l'effet d'ombre ; et s'il est déterminé que l'effet d'ombre existe,
régler les données de distance (do) pour compenser (d_{Δ}) l'au moins une source de lumière (121, 122, 123, 124) dont la lumière n'a pas atteint l'au moins une partie de l'au moins un second objet (FLT, FRT ; RLT, RRT) en modifiant un élément de données de distance (d_{D}') exprimant une distance jusqu'à un point (P1, P2, ..., P6) sur une surface (FLT_{S1}) sur l'au moins une partie de l'au moins un second objet (FLT) par une quantité d'adaptation (d_{Δ}), l'élément des données de distance (d_{D}') étant déterminée sans tenir compte de l'effet d'ombre, et la quantité d'adaptation (d_{Δ}) dépendant de quelle source de lumière ou sources de lumière parmi les au moins deux sources de lumière (121, 122, 123, 124) dont la lumière n'a pas atteint ledit point (P1, P2, ..., P6), où les au moins deux sources de lumière correspondent à un premier nombre total n et la source de lumière ou les sources de lumière dont la lumière n'a pas atteint ledit point correspondent à un second nombre total allant d'un jusqu'à n-1, dans lequel
le processeur d'images (140) est relié de manière communicative à une table de recherche (1450) comprenant un ensemble de données exprimant la quantité d'adaptation (d_{Δ}) pour chaque combinaison possible de sources de lumière parmi les au moins deux sources de lumière (121, 122, 123, 124) dont la lumière n'a pas atteint ledit point (P1, P2, ..., P6) sur au moins une distance exprimée par les données de distance (d_{D}), et
le processeur d'images (140) est conçu pour obtenir la quantité d'adaptation (d_{Δ}) à partir de la table de recherche (1450).

2. Processeur d'images (140) selon la revendication 1, dans lequel l'au moins un premier objet (TC) a une position et une extension spatiale connues vis-à-vis du système d'imagerie TOF (110) et des au moins deux sources de lumière (121, 122, 123, 124), et le processeur d'images (140) est conçu pour :
régler les données de distance (do) pour compenser l'au moins une des au moins deux sources de lumière (121, 122, 123, 124) dont la lumière est empêchée d'atteindre au moins un secteur (S₁₄, S₀, S₁₂, S₃₄) derrière l'au moins un premier objet (TC).

3. Processeur d'images (140) selon l'une quelconque des revendications précédentes, dans lequel la scène (100) comprend un lieu de traite, et au moins l'un des au moins un premier objet est un gobelet trayeur (TC) disposé sur une structure porteuse (RA) liée mécaniquement au système d'imagerie TOF (110).

4. Processeur d'images (140) selon l'une quelconque des revendications précédentes, dans lequel la scène (100) comprend un lieu de traite, et au moins l'un des au moins un premier objet est un trayon (FRT, FLT) d'un animal de traite.

5. Processeur d'images (140) selon l'une quelconque des revendications précédentes, conçu pour exécuter :
une première étape de traitement dans laquelle est déterminée une position spatiale d'un autre objet potentiellement ombrageux (FLT) de la scène (100), lequel autre objet potentiellement ombrageux (FLT) est situé à une distance plus courte du système d'imagerie TOF (110) que tout autre objet de la scène (100) qui n'a pas encore été inclus dans le groupe de candidats ;
une deuxième étape de traitement dans laquelle ledit algorithme inverse de traçage de rayons est appliqué pour établir au moins un secteur de la scène (100) estimé comme étant ombragé par l'autre objet potentiellement ombrageux (FLT) par rapport à la lumière provenant d'au moins une source de lumière (121, 124) parmi les au moins deux sources de lumière (121, 122, 123, 124) ; et
une troisième étape de traitement dans laquelle l'autre objet potentiellement ombrageux (FLT) est inclus dans le groupe de candidats parmi lesquels sélectionner l'au moins un premier objet (TC, FLT, FRT) lors de la détermination de l'existence de l'effet d'ombrage.

6. Processeur d'images (140) selon la revendication 5, conçu pour répéter les première, deuxième et troisième étapes de traitement jusqu'à ce qu'un critère d'arrêt soit rempli, dans lequel le critère d'arrêt est défini en réponse à au moins l'une parmi : une contrainte de temps et une contrainte de capacité de traitement.

7. Processeur d'images (140) selon l'une quelconque des revendications précédentes, conçu pour :
déterminer un premier élément des données de distance (do) exprimant une première distance jusqu'à une première zone de surface (ARLT₁₂₃₄) du second objet (RLT), laquelle première zone de surface est située dans un premier secteur (S₁₂₃₄) éclairé par la totalité des au moins deux sources de lumière (121, 122, 123, 124) ; et
déterminer un second élément des données de distance (do) exprimant une seconde distance jusqu'à une seconde zone de surface (ARLT₂₃) de l'au moins une partie de l'au moins un second objet (RLT), laquelle seconde zone de surface est située dans un second secteur (S₂₃) éclairé par un sous-ensemble des au moins deux sources de lumière (121, 122, 123, 124), et la détermination du second élément des données de distance (do) implique l'extrapolation de la première zone de surface (ARLT₁₂₃₄) dans le second secteur (S₂₃) dans lequel l'extrapolation suppose que l'au moins un second objet (RLT) a une forme généralement connue.

8. Processeur d'images (140) selon la revendication 7, dans lequel la scène (100) comprend un lieu de traite, et l'au moins un second objet (RLT) est un trayon d'un animal de traite.

9. Processeur d'image (140) selon l'une quelconque des revendications précédentes, dans lequel les données d'image (D_{img}) comprennent des données qui, pour chaque pixel d'un ensemble de pixels, expriment une valeur d'intensité de lumière, et le processeur d'image (140) est en outre conçu pour :
régler la valeur d'intensité d'un pixel de l'ensemble de pixels par une intensité d'adaptation, lequel pixel représente un point (P1, P2, ..., P6) sur une surface (FLT_{S1}) de l'au moins une partie de l'au moins un second objet étant éclairé par la lumière de moins de la totalité des au moins deux sources de lumière (121, 122, 123, 124), la valeur d'intensité étant calculée sans tenir compte de l'effet d'ombre, et l'intensité d'adaptation étant proportionnelle à un nombre des au moins deux sources de lumière (121, 122, 123, 124) dont la lumière est empêchée d'atteindre ledit point (P1, P2, ..., P6), où les au moins deux sources de lumière correspondent à un premier nombre total n et la source de lumière ou les sources de lumière dont la lumière n'a pas atteint ledit point correspondent à un second nombre total allant d'un jusqu'à n-1.

10. Procédé de traitement d'images mis en œuvre par ordinateur comprenant :
l'obtention de données d'image (D_{img}) enregistrées par un système d'imagerie à temps de vol, TOF, (110), lesquelles données d'image (D_{img}) représentent une scène (100) éclairée par au moins deux sources de lumière (121, 122, 123, 124) étalonnées pour permettre au processeur d'image (140) de produire des données de distance (do) qui doivent être comprises dans les données d'image (D_{img}), lesquelles données de distance (do) expriment les distances respectives du système d'imagerie TOF (110) aux points des objets imagés ;
la détermination de s'il existe un effet d'ombre par lequel au moins un premier objet (TC ; FLT, FRT) de la scène (100) empêche la lumière provenant d'au moins une source de lumière (121, 122, 123, 124) parmi les au moins deux sources de lumière (121, 122, 123, 124) d'atteindre au moins une partie d'au moins un second objet (FLT, FRT ; RLT, RRT) de la scène (100) et d'être réfléchie par celui-ci dans le système d'imagerie TOF (110) ; **caractérisé en ce que** le procédé comprend en outre :
la détermination d'une distance (do) jusqu'à un objet potentiellement ombrageux (TC, FRT, FLT) de la scène (100), lequel objet potentiellement ombrageux (TC, FRT, FLT) est situé à une distance plus courte du système d'imagerie TOF (110) que tout autre objet dans la scène (100) ;
l'application d'un algorithme inverse de traçage de rayons pour établir au moins un secteur (B_{TC1234}, B_{TC12}, B_{TC34}, B_{FRT}) de la scène (100) estimé être ombragé par l'objet potentiellement ombrageux (TC, FRT, FLT) par rapport à la lumière provenant d'au moins une source de lumière parmi les au moins deux sources de lumière (121, 122, 123, 124) ; et
l'inclusion de l'objet potentiellement ombrageux (TC, FRT, FLT) dans un groupe de candidats parmi lesquels sélectionner l'au moins un premier objet (TC, RLT, RRT) lors de la détermination de l'existence de l'effet d'ombre ; et s'il est déterminé que l'effet d'ombre existe,
le réglage des données de distance (d_{D}) pour compenser (d_{Δ}) l'au moins une source de lumière (121, 122, 123, 124) dont la lumière n'a pas atteint l'au moins une partie de l'au moins un second objet (FLT, FRT ; RLT, RRT) en modifiant un élément de données de distance (d_{D}') exprimant une distance jusqu'à un point (P1, P2, ..., P6) sur une surface (FLT_{S1}) sur l'au moins une partie de l'au moins un second objet (FLT) par une quantité d'adaptation (d_{Δ}), l'élément des données de distance (d_{D}') étant déterminée sans tenir compte de l'effet d'ombre, et la quantité d'adaptation (d_{Δ}) dépendant de quelle source de lumière ou sources de lumière parmi les au moins deux sources de lumière (121, 122, 123, 124) dont la lumière n'a pas atteint ledit point (P1, P2, ..., P6),
l'obtention de la quantité d'adaptation (d_{Δ}) à partir d'une table de recherche (1350) comprenant un ensemble de données exprimant la quantité d'adaptation (d_{Δ}) pour chaque combinaison possible de sources de lumière parmi les au moins deux sources de lumière (121, 122, 123, 124) dont la lumière n'a pas atteint ledit point (P1, P2, ..., P6) sur au moins une distance exprimée par les données de distance (d_{D}).

11. Procédé selon la revendication 10, dans lequel l'au moins un premier objet (TC) a une position et une extension spatiale connues vis-à-vis du système d'imagerie TOF (110) et des au moins deux sources de lumière (121, 122, 123, 124), et le procédé comprend :
le réglage des données de distance (d_{D}) pour compenser l'au moins une des au moins deux sources de lumière (121, 122, 123, 124) dont la lumière est empêchée d'atteindre au moins un secteur (S₁₄, S₀, S₁₂, S₃₄) derrière l'au moins un premier objet (TC).

12. Procédé selon l'une quelconque des revendications 10 à 11, comprenant :
l'exécution d'une première étape de traitement dans laquelle est déterminée une position spatiale d'un autre objet potentiellement ombrageux (RLT) de la scène (100), dont l'autre objet potentiellement ombrageux (RLT) est situé à une distance plus courte du système d'imagerie TOF (110) que tout autre objet de la scène (100) qui n'a pas encore été inclus dans le groupe de candidats ;
l'exécution d'une deuxième étape de traitement dans laquelle ledit algorithme inverse de traçage de rayons est appliqué pour établir au moins un secteur de la scène (100) estimé comme étant ombragé par l'autre objet potentiellement ombrageux (RLT) par rapport à la lumière provenant d'au moins une source de lumière (121, 124) parmi les au moins deux sources de lumière (121, 122, 123, 124) ; et
l'exécution d'une troisième étape de traitement dans laquelle l'autre objet potentiellement ombrageux (RLT) est inclus dans le groupe de candidats parmi lesquels sélectionner l'au moins un premier objet (TC, RLT, RRT) lors de la détermination de l'existence de l'effet d'ombrage.

13. Procédé selon la revendication 12, comprenant l'exécution des première, deuxième et troisième étapes de traitement de manière répétée jusqu'à ce qu'un critère d'arrêt soit rempli et la définition du critère d'arrêt en réponse à au moins l'une parmi : une contrainte de temps et une contrainte de capacité de traitement.

14. Procédé selon l'une quelconque des revendications 10 à 13, comprenant :
la détermination d'un premier élément des données de distance (do) exprimant une première distance jusqu'à une première zone de surface (ARLT₁₂₃₄) du second objet (RLT), laquelle première zone de surface est située dans un premier secteur (S₁₂₃₄) éclairé par la totalité des au moins deux sources de lumière (121, 122, 123, 124) ; et
la détermination d'un second élément des données de distance (do) exprimant une seconde distance jusqu'à une seconde zone de surface (ARLT₂₃) de l'au moins une partie de l'au moins un second objet (RLT), laquelle seconde zone de surface est située dans un second secteur (S₂₃) éclairé par un sous-ensemble des au moins deux sources de lumière (121, 122, 123, 124), et la détermination du second élément des données de distance (d_{D}) implique l'extrapolation de la première zone de surface (ARLT₁₂₃₄) dans le second secteur (S₂₃), dans lequel l'extrapolation suppose que l'au moins un second objet (RLT) a une forme généralement connue.

15. Procédé selon l'une quelconque des revendications 10 à 14, dans lequel les données d'image (D_{img}) comprennent des données qui pour chaque pixel d'un ensemble de pixels expriment une valeur d'intensité de lumière, et le procédé comprend en outre :
le réglage de la valeur d'intensité d'un pixel de l'ensemble de pixels par une intensité d'adaptation, lequel pixel représente un point (P1, P2, ..., P6) sur une surface (FLT_{S1}) de l'au moins une partie de l'au moins un second objet étant éclairé par la lumière de moins de la totalité des au moins deux sources de lumière (121, 122, 123, 124), la valeur d'intensité étant calculée sans tenir compte de l'effet d'ombre, et l'intensité d'adaptation étant proportionnelle à un nombre des au moins deux sources de lumière (121, 122, 123, 124) dont la lumière est empêchée d'atteindre ledit point (P1, P2, ..., P6).
